# EUROPEAN PATENT SPECIFICATION

(11) **EP 0 986 925 B1**
(45) Date of publication and mention of the grant of the patent: **03.11.2004**
(21) Application number: 98924345.6
(22) Date of filing: 02.06.1998
(51) Int. Cl.: H04Q 7/22, H04Q 7/32

(54) **PROCEDURE FOR THE CONTROL OF A SUBSCRIBER IDENTITY MODULE IN A DATA COMMUNICATION SYSTEM, AND A DATA COMMUNICATION SYSTEM**
VERFAHREN ZUR STEUERUNG EINES TEILNEHMERIDENTIFIKATIONSMODULS IN EINEM DATENKOMMUNIKATIONSSYSTEM UND DATENKOMMUNIKATIONSSYSTEM
SYSTEME DE TRANSMISSION DE DONNEES ET SON PROCEDE DE COMMANDE D'UN MODULE D'IDENTITE D'ABONNE

(30) Priority: 04.06.1997 FI 972369
(43) Date of publication of application: 22.03.2000
(73) Proprietor: TeliaSonera Finland Oyj, 00510 Helsinki (FI)
(72) Inventor: LINKOLA, Janne, FIN-02210 Espoo (FI); BLOMBERG, Olavi, FIN-02700 Kauniainen (FI)
(74) Representative: Papula, Antti
(86) International application number: PCT/FI1998/000476
(87) International publication number: WO 1998/056201

(56) References cited:
- EP-A2- 0 789 500
- WO-A1-97/30561
- WO-A1-97/36437
- DE-A1- 4 321 381

## Description

### FIELD OF THE INVENTION

The present invention relates to a procedure as defined in the preamble of claim 1 for the control of a subscriber identity module in a data communication system, preferably a mobile telephone network. Moreover, the invention relates to a data communication system as defined in the preamble of claim 8.

### BACKGROUND OF THE INVENTION

In a mobile communication system, subscriber data are stored in a unit or device specially designed for data management. For instance, in the GSM system such a device is the home location register (HLR). Stored in this register are certain parameters related to the subscriber or subscription, such as the mobile subscriber international ISDN number (MSISDN) and international mobile subscriber identification (IMSI) code.

In practice, the capacity of a single physical home location register is limited. The home location register devices used in the GSM system can typically handle about 200000 - 300000 customers. Therefore, big operators need several home location register devices.

The data contained in the subscriber identity module used in a mobile communication system includes the same data that are stored in the home location register. In addition to these data, the subscriber identity module contains a secret key Kᵢ used for encryption of radio communication and authentication of the mobile station. The data are generally added at the last stage of production of the subscriber identity module in conjunction with its personalisation. After this, changing the data is either very difficult or impossible.

The customer may lose his/her subscriber identity module or the module may be damaged. Therefore, the operator must store subscriber identity modules suited for all home location registers at each customer service point if the operator wants to provide a flexible and full service regarding the renewal and control of subscriber identity modules. If the operator has e.g. 20 home location registers in its mobile communication system, then the customer service points must have an assortment of 20 subscriber identity modules containing different data. This gives rise to a distinct logistic problem as well as a problem of efficiency regarding the capital invested in subscriber identity modules.

Patent publication DE-A1-4321381 discloses a method and a system for exchanging or amending software in devices by using simple means. In the publication the application uses an already existing card interface and simulation of a card. The simulation of a .card is connected to data processing device, such as personal computer, or has a memory. In the inserted state a special software recognizes that an exchange or an amendment is to be performed and the new software is implemented and starts to function.

WO 9736437 discloses a method for retrieving information stored on a subscriber identity module (SIM). In the method an SMS or a USSD message is used for encapsulation request for retrieving information stored on the module. The mobile station comprising the subscriber identity module is equipped with a special application module that has access to the module. The application module retrieves the information and sends it back to the requester by using an SMS-message. The drawback of the solution is that an application module has to be arranged into the device using the subscriber identity module.

WO 9730561 discloses a method for mobile telephone roaming using dual mode equipment including SIM cards. In the example embodiment mobile stations are provided with a preferred roaming selection list at a predetermined memory location in a subscriber identity module. Pointers are provided in the preferred roaming selection list to memory locations in the SIM where lists of networks associated with each entry in the list are stored.

EP 0789500 discloses a method for changing access rights for a telecommunications terminal in a bidirectional mobile radio network. The method involves configuring a SIM card, which enables a member of a bidirectional radio network subscriber group to contact other members. A master station sends a SMS message to the SIM card, which includes a modification code. The card recognises the code using a stored algorithm and parameters which are included in the SMS message. The register of members which can be contacted is updated and stored by means of the parameters.

### SUMMARY OF THE INVENTION

The object of the present invention is to eliminate the drawbacks described above. A specific object of the present invention is to present a new type of procedure for the control of subscriber identity modules in a data communication system.

A further object of the invention is to present a device that can be used to change the data in a subscriber identity module to implement a flexible control of the module.

A further object of the invention is to give the operator a chance to improve customer service. A specific object is to improve the service relating to the change of subscriber identity modules and replacement of damaged modules.

As for the features characteristic of the invention, reference is made to the claims.

In the procedure of the invention for the control of a subscriber identity module, which contains a subscriber identity code and a secret key, in a data communication system, such as a mobile communication network, comprising a subscriber register for the maintenance of a subscriber identity module register, a message transmission system for the transmission of a message in the mobile communication network, and a mobile station to which the subscriber identity module is connected, a record is created in the subscriber register when the first subscription for a subscriber is opened, said record comprising a call number specific to the subscription, an encryption code and a subscriber identity code associated with the subscription. In addition, services specified for the subscriber in the mobile communication network can be stored in a home location register. The home location register is preferably a register in a GSM mobile communication network and contains subscriber specific information relating to right of use and functions. When the subscriber enters the area of a mobile communication switching centre, the mobile station reports to its visitor location register (VLR). The mobile communication switching centre then fetches the subscriber data from the subscriber's home location register and sends them to the visitor location register of its own area and simultaneously updates the location data for the subscriber.

As stated above, large mobile communication networks comprise several home location registers. Furthermore, the range of subscriber identity codes (IMSI) of a single home location register can be divided into several sections, which means that, in respect of control of subscriber identity modules, a single physical subscriber register device may comprise several subscriber registers (different IMSI ranges).

According to the invention, a second subscription associated with the subscriber identity module is opened. At the same time, a record comprising the call number, subscriber identity code and key corresponding to the second subscription is created in a subscriber register, which generally is different from the home location register containing the record for the first subscription. A message comprising an instruction for changing the data corresponding to the first subscription in the subscriber identity module is sent to the first subscription and further to the subscriber identity module, and, based on the message, the data corresponding to the first subscription stored in the subscriber identity module are changed into data corresponding to the second subscription. Thus, the subscriber identity module and the mobile station to which. the subscriber identity module is connected will function in accordance with the services and functions defined for the second subscription.

As compared with prior art, the invention has the advantage that it makes it possible to significantly simplify the control of subscriber identity modules even in large mobile communication systems.

A further advantage of the invention is that the operator of the mobile communication network can avoid the logistic problem caused by the use of multiple different subscriber identity modules. Moreover, the procedure of the invention allows better and faster customer service in respect of subscriber identity modules.

### BRIEF DESCRIPTION OF THE DRAWINGS

The accompanying drawings, which are included to provide a further understanding of the invention and constitute a part of this specification, illustrate possible embodiments of the invention and together with the description help to explain the principles of the invention. In the drawings:

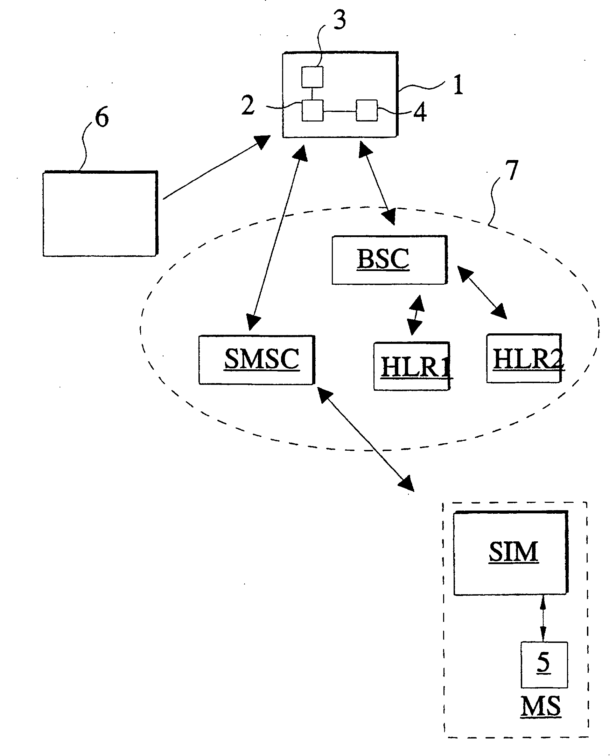

Fig. 1 is a block diagram of one embodiment of the invention.

### DETAILED DESCRIPTION OF THE INVENTION

In an embodiment of the invention, a message is received and the data are changed when the mobile station is switched on for the first time with the subscriber identity module connected to it. Upon receipt of the message, an acknowledgement of receipt of the message is sent. Based on the acknowledgement, the mobile communication system removes the first subscription from the data communication system and from the home location register. It is also possible to send the acknowledgement only after the subscriber identity module has processed the message, thus making sure that the data in the subscriber identity module have been changed.

In an embodiment of the present invention, the system waits for an acknowledgement of receipt of the message for a predetermined period of time, e.g. 24 h, and if no acknowledgement is received within this period, the message is sent again. The new message can also be sent to both subscriptions, because it is possible in certain conditions that the data in the subscriber identity module have already been changed but no acknowledgement has been sent before the mobile station loses connection with the network. This guarantees that the mobile station and the subscriber identity module will receive the message sent and, based on the message, carry out the changes in the subscriber identity module and that the subscriber data in the mobile communication system remain up to date.

In an embodiment, acknowledgement of receipt of the message can be regarded as consisting of the occurrence of a mobile station corresponding to the second subscription being attached to the system (IMSI attach). In conjunction with the changing of the data in the subscriber identity module, the subscriber identity code corresponding to the first subscription is deleted from the subscriber identity module. In addition, the temporary mobile subscriber identity (TMSI) code can be deleted.

According to the invention, the data communication system of the invention, such as a mobile communication network, comprises a control device, which comprises means for opening a second subscription associated with the subscriber identity module; means for creating a record in the subscriber register, said record comprising the call number, subscriber identity code and key corresponding to the second subscription. Further, according to the invention, the data communication system comprises means for generating a message to be sent to the first subscription, said message containing an instruction for changing the data corresponding to the first subscription in the subscriber identity module, and means for changing the data corresponding to the first subscription stored in the subscriber identity module into data corresponding to the second subscription.

The control device is preferably disposed in conjunction with a billing and customer control system in the data communication system or mobile communication network. Further, the message transmission system used in the system of the invention may be a short-message system as known in the GSM system.

In the following, the invention will be described by the aid of examples of preferred embodiments by referring to the attached drawing, which is a diagram representing a data communication system according to the invention.

The data communication system shown in the drawing, preferably a GSM system, comprises a mobile station MS, a subscriber identity module SIM connected to the mobile station, and, in the mobile station, means 5 for changing the data corresponding to the first subscription and stored in the subscriber identity module into data corresponding to the second subscription. In the mobile station, said means 5 are preferably implemented as part of a device controlling the subscriber identity module or as part of the subscriber identity module SIM itself.

In addition, the data communication system presented in the drawing comprises a short-message switching centre SMSC and a base station controller BSC. The base station controller further comprises a home location registers HLR1, HLR2.

The system presented in the drawing further comprises a control device 1 disposed in conjunction with the billing and customer control system (not shown). In addition, the drawing shows an agency apparatus 6 provided at an agency that sells subscriptions and used to transmit the service and function data relating to a new subscription to the data communication system. In the drawing, the signalling occurring between the various devices is represented by arrows. The direction of the arrow indicates the signalling direction.

The control device further comprises means 2 for opening a second subscription, means 3 for creating a record in the subscriber register and means 4 for generating a message to be sent to the first and/or second subscription. These means 2, 3, 4 can preferably be implemented in one and the same computer, which is provided with suitable software for carrying out the aforementioned functions and with a suitable interface for connecting the computer to the mobile communication network 7. With this arrangement, the properties and functions of the means can be flexibly changed by changing the software used in the computer.

Further, referring to the drawing, in a preferred example embodiment of the invention, the seller of the subscription provides the international mobile station identity IMSI code of the subscriber identity module and the international telephone number of the subscription. This number pair is transmitted via the agency apparatus 6 to the control device 1. The control device 1 then opens in the billing and customer control system two subscriptions, whose parameters are: (IMSI1, MSISDNx, Kᵢ) and (IMSI2, MSISDN, Kᵢ), where IMSI corresponds to the subscriber identity code, MSISDN corresponds to the international telephone number and Kᵢ corresponds to the secret key used for encryption of radio communication and for authentication of the mobile station. Based on the function, records are also created in the first subscriber register HLR1 and in the second subscriber register HLR2, respectively. In this example, the subscription corresponding to the first subscriber identity code IMSI1 contains only one service, the short-message service. For the subscription corresponding to the second subscriber identity code IMSI2, the services chosen by the subscriber are activated and corresponding information is sent to the control device 1 via the agency device 6.

After the two subscriptions have been opened, the control device of the invention sends a short message SMS corresponding to the MSISDNx telephone number to the first subscription via the short-message switching centre SMSC. After the short message has been sent by the short-message switching centre and received by the mobile station to which the subscriber identity module is connected, then the IMSI1 code in the subscriber identity module SIM of the mobile station is changed to the value IMSI2, and the ISMS1 and TIMSI codes in the subscriber identity module are deleted. After this, when the mobile station is switched off and switched on again, the data in the subscriber identity module will be those corresponding to the second subscription, i.e. the subscription for which the subscriber identity code is IMSI2 and for which the international telephone number is MSISDN.

Moreover, the mobile station sends an acknowledgement of receipt of the short message and when the acknowledgement is received by the control device 1 of the invention, the control device will delete the data corresponding to the first subscription from the billing and customer control system. However, it is possible that the mobile station is switched off before the acknowledgement is sent and the data changed, in which case the rest of the system will not know that the subscription has been changed. For this reason, in an embodiment of the invention, the control device is provided with a timeout for monitoring the receipt of the acknowledgement. If no acknowledgement is received within a given period of time, e.g. 24 h, then the short message is sent to the mobile station number MSISDN corresponding to the second subscription. When an acknowledgement is received for either one of the messages, then, based on the acknowledgement, the data corresponding to the first subscription are deleted from the billing and control system.

In addition, it is possible that the deletion of the data occurs as a consequence of an action carried out by another customer or by a terminal device held by another customer. A possible action of this nature might be e.g. the first attachment (IMSI attach) of another subscription received in a mobile communication network, of which a notice is transmitted to the service control device.

In summary, let it be further stated that the solution of the invention combines the use of prior-art short messages and the use of a subscriber register and a billing and customer control system. Via this solution, an operations model is created according to which the operator only needs to order a single type of subscriber identity modules but is still able to offer flexible card change services at all customer service points. It is further to be noted that the mobile communication network also provides other possibilities that can be utilised for the transmission of the message to the subscriber identity module.

The invention is not restricted to the examples of its embodiments described above, but many variations are possible within the scope of the inventive idea defined by the claims.

## Claims

1. Procedure for the control of a subscriber identity module [SIM], which contains a subscriber identity code [IMSI1] and a key [K₁], in a data communication system comprising at least two subscriber registers [HLR1, HLR2] for the maintenance of a subscriber identity module register, a message transmission system [SMSC] for the transmission of a message in the mobile communication network, and a mobile station [MS] to which the subscriber identity module is connected, in which procedure a record is created in the first subscriber register [HLR1] when a first subscription is opened, said record comprising a subscription specific call number [MSISDNx], an encryption code [Kᵢ] and a subscriber identity code [IMSI1] associated with the subscription, **characterised in that**
a second subscription associated with the subscriber identity module [SIM] is opened;
a record comprising the call number [MSISDN], subscriber identity code [IMSI2] and encryption key [Kᵢ] corresponding to the second subscription is created in the second subscriber register [HLR2];
a message [SMS] containing an instruction for changing the data corresponding to the first subscription in the subscriber identity module [SIM] is sent to the first subscription; and
the message [SMS] is further sent to the subscriber identity module [SIM] wherein based on the instruction, the data corresponding to the first subscription stored in the subscriber identity module are changed into data corresponding to the second subscription.

2. Procedure as defined in claim 1, **characterised in that** an acknowledgement of receipt of the message [SMS] and successful change is sent from the subscriber identity module [SIM] and, based on the acknowledgement, the first subscription is removed from the data communication system.

3. Procedure as defined in claim 1 or 2, **characterised in that** the message [SMS] is sent to the second subscription, an acknowledgement of receipt of the message is sent from the second subscription and, based on the acknowledgement, the first subscription is removed from the data communication system.

4. Procedure as defined in any one of the preceding claims 1 - 3, **characterised in that** the system waits for an acknowledgement of receipt of the message for a predetermined period of time and, if no acknowledgement is received within this period, the message is sent again to the second subscription.

5. Procedure as defined in any one of the preceding claims 1 - 4, **characterised in that** the first subscription is removed when attachment of the second subscription to the data communication system is detected in the system.

6. Procedure as defined in any one of the preceding claims 1 - 5, **characterised in that** a corresponding temporary subscriber identity code [TMSI] stored in the subscriber identity module is removed.

7. Procedure as defined in any one of the preceding claims 1 - 6, **characterised in that** the data communication system is a GSM mobile communication system.

8. Data communication system for controlling a subscriber identity module [SIM] containing a subscriber identity code [IMSI1] and a key [Kᵢ], said data communication system comprising at least two subscriber registers [HLR1, HLR2] for the maintenance of a subscriber identity module register, a message transmission system [SMSC] for the transmission of a message in the mobile communication network, and a mobile station [MS] to which the subscriber identity module is connected, in which data communication system a record is created in the first subscriber register [HLR1] when a first subscription is opened, said record comprising a subscription specific call number [MSISDNx], an encryption code [Kᵢ] and a subscriber identity code [IMSI1] associated with the subscription, **characterised in that** the data communication system comprises a control device (1), which comprises
means (2) for opening a second subscription associated with the subscriber identity module [SIM];
means (3) for creating a record in the second subscriber register [HLR2], said record comprising the call number [MSISDN], subscriber identity code [IMSI2] and key [Kᵢ] corresponding to the second subscription;
means (4) for generating a message [SMS] to be sent to the first subscription and furthermore to the subscriber identity module [SIM], said message containing an instruction for changing the data corresponding to the first subscription in the subscriber identity module; and
means (5) for changing the data corresponding to the first subscription stored in the subscriber identity module into data corresponding to the second subscription.

9. Data communication system as defined in claim 8, **characterised in that** the control device (1) is disposed in conjunction with a billing and customer control system in the data communication system.

10. Data communication system as defined in claim 8 or 9, **characterised in that** the message transmission system [SMSC] is a short-message system.

## Patentansprüche

1. Verfahren zur Steuerung eines Teilnehmer-Identitäts-Moduls [SIM von Subscriber Identity Module], das einen Teilnehmer-Identitäts-Code [IMSI1] und einen Schlüssel [K1] enthält, in einem Datenkommunikationssystem, aufweisend mindestens zwei Teilnehmerregister [HLR1, HLR2], zur Unterhaltung eines Teilnehmer-Identitäts-Modul-Registers, ein Nachrichtenübertragungssystem [SMSC] zur Übertragung einer Nachricht im mobilen Kommunikationsnetzwerk, und eine Mobilstation [MS], mit der das Teilnehmer-Identitäts-Modul verbunden ist, wobei in diesem Verfahren im ersten Teilnehmerregister [HLR1] ein Protokoll erstellt wird, wenn eine erste Teilnehmereinbuchung eingerichtet wird, wobei besagtes Protokoll eine Teilnehmereinbuchungs-spezifische Rufnummer [MSISDNx], einen Verschlüsselungs-Code [K1] und einen der Teilnehmereinbuchung zugeordneten TeilnehmerIdentitäts-Code [IMSI1] umfasst,
**dadurch gekennzeichnet, dass**
eine mit dem Teilnehmer-Identitäts-Modul [SIM] verbundene zweite Teilnehmereinbuchung eröffnet wird;
in dem zweiten Teilnehmerregister [HLR2] ein Protokoll erstellt wird, das die Rufnummer [MSISDN], den Teilnehmer-Identitäts-Code [IMSI2] und den Verschlüsselungsschlüssel [K1] umfasst, die der zweiten Teilnehmereinbuchung entsprechen;
eine Nachricht [SMS], die eine Anweisung zur Änderung der Daten in dem Teilnehmer-Identitäts-Modul [SIM] enthält, die der ersten Teilnehmereinbuchung entsprechen, an die erste Teilnehmereinbuchung geschickt wird; und
die Nachricht [SMS] ferner an das Teilnehmer-Identitäts-Modul [SIM] geschickt wird, wobei die in dem Teilnehmer-Identitäts-Modul gespeicherten Daten, die der ersten Teilnehmereinbuchung entsprechen, basierend auf der Anweisung in Daten abgeändert werden, die der zweiten Teilnehmereinbuchung entsprechen.

2. Verfahren wie in Anspruch 1 definiert,
**dadurch gekennzeichnet,**
**dass** eine Bestätigung des Empfangs der Nachricht [SMS] und der erfolgreichen Änderung von dem Teilnehmer-Identitäts-Modul [SIM] geschickt wird und die erste Teilnehmereinbuchung basierend auf der Bestätigung aus dem Datenkommunikationssystem entfernt wird.

3. Verfahren wie in Anspruch 1 oder 2 definiert,
**dadurch gekennzeichnet,**
**dass** die Nachricht [SMS] zu der zweiten Teilnehmereinbuchung geschickt wird, eine Bestätigung des Empfangs der Nachricht von der zweiten Teilnehmereinbuchung geschickt wird und die erste Teilnehmereinbuchung basierend auf der Bestätigung aus dem Datenkommunikationssystem gelöscht wird.

4. Verfahren wie in einem der vorhergehenden Ansprüche 1 - 3 definiert,
**dadurch gekennzeichnet,**
**dass** das System eine vorgegebene Zeitspanne auf eine Bestätigung des Empfangs der Nachricht wartet und die Nachricht noch einmal zu der zweiten Teilnehmereinbuchung geschickt wird, wenn innerhalb dieser Zeitspanne keine Bestätigung empfangen wurde.

5. Verfahren wie in einem der vorhergehenden Ansprüche 1 - 4 definiert,
**dadurch gekennzeichnet,**
**dass** die erste Teilnehmereinbuchung gelöscht wird, wenn eine Anbindung der zweiten Teilnehmereinbuchung an das Datenkommunikationssystem in dem System erfasst wird.

6. Verfahren wie in einem der vorhergehenden Ansprüche 1 - 5 definiert,
**dadurch gekennzeichnet,**
**dass** ein entsprechender in dem Teilnehmer-Identitäts-Modul gespeicherter temporärer Teilnehmer-Identitäts-Code [TMSI] entfernt wird.

7. Verfahren wie in einem der vorhergehenden Ansprüche 1 - 6 definiert,
**dadurch gekennzeichnet,**
**dass** das Datenkommunikationssystem ein GSM-Mobil-Kommunikationssystem ist.

8. Datenkommunikationssystem zur Steuerung eines Teilnehmer-Identitäts-Moduls [SIM], das einen Teilnehmer-Identitäts-Code [IMSI1] und einen Schlüssel [K1] enthält, wobei besagtes Datenkommunikationssystem mindestens zwei Teilnehmerregister [HLR1, HLR2], zur Unterhaltung eines Teilnehmer-Identitäts-Modul-Registers, ein Nachrichtenübertragungssystem [SMSC] zur Übertragung einer Nachricht im mobilen Kommunikationsnetzwerk, und eine Mobilstation [MS], mit der das Teilnehmer-Identitäts-Modul verbunden ist, aufweist, wobei in diesem Datenkommunikationssystem im ersten Teilnehmerregister [HLR1] ein Protokoll erstellt wird, wenn eine erste Teilnehmereinbuchung eröffnet wird, wobei besagtes Protokoll eine Teilnehmereinbuchungs-spezifische Rufnummer [MSISDNx], einen Verschlüsselungs-Code [K1] und mit der Teilnehmereinbuchung zugeordneten Teilnehmer-Identitäts-Code [IMSI1] umfasst,
**dadurch gekennzeichnet, dass** das Datenkommunikationssystem ein Steuergerät (1) umfasst, aufweisend:
eine Einrichtung (2) zur Eröffnung einer zweiten Teilnehmereinbuchung, die dem Teilnehmer-Identitäts-Modul [SIM] zugeordnet ist,
eine Einrichtung (3) zur Schaffung eines Protokolls im zweiten Teilnehmerregister [HLR2], wobei besagtes Protokoll die Rufnummer [MSISDN], den Teilnehmer-Identitäts-Code [IMSI2] und den Schlüssel [K1] umfasst, die der zweiten Teilnehmereinbuchung entsprechen;
eine Einrichtung (4) zur Erzeugung einer Nachricht [SMS], die zu der ersten Teilnehmereinbuchung und zudem an das Teilnehmer-Identitäts-Modul [SIM] zu schicken ist, wobei besagte Nachricht eine Anweisung zur Änderung der Daten enthält, die der ersten Teilnehmereinbuchung im Teilnehmer-Identitätsmodul entsprechen; und
eine Einrichtung (5) zur Änderung der Daten, die der ersten Teilnehmereinbuchung entsprechen und im Teilnehmer-Identitäts-Modul gespeichert sind, in Daten, die der zweiten Teilnehmereinbuchung entsprechen.

9. Datenkommunikationssystem wie in Anspruch 8 definiert,
**dadurch gekennzeichnet,**
**dass** das Steuergerät (1) in dem Datenkommunikationssystem in Verbindung mit einem Gebührenerfassungs- und Kundensteuersystem eingerichtet ist.

10. Datenkommunikationssystem wie in Anspruch 8 oder 9 definiert,
**dadurch gekennzeichnet,**
**dass** das Nachrichtenübertragungssystem [SMSC] ein Kurznachrichten-System ist.

## Revendications

1. Procédé pour contrôler un module d'identité d'abonné [SIM], contenant un code d'identité d'abonné [IMSII] et une clé [K₁], dans un système de communication de données comprenant au moins deux registres d'abonné [HLR1, HLR2] pour la maintenance d'un registre de module d'identité d'abonné, un système de transmission de messages [SMSC] pour transmettre un message dans le réseau de communication mobile, et une station mobile [MS] à laquelle le module d'identité d'abonné est connecté ; procédé dans lequel un enregistrement est créé dans le premier registre d'abonné [HLR1] lorsqu'un premier abonnement est ouvert, ledit enregistrement comprenant un numéro d'appel spécifique d'abonnement [MSISDNx], un code de chiffrement [K₁] et un code d'identité d'abonné [IMSI1] associés à l'abonnement, **caractérisé en ce que** :
un deuxième abonnement associé au module d'identité d'abonné [SIM] est ouvert ;
un enregistrement comprenant le numéro d'appel [MSISDN], le code d'identité d'abonné [IMSI2] et la clé de chiffrement [K₁] correspondant au deuxième abonnement est créé dans le deuxième registre d'abonné [HLR2] ;
un message [SMS] contenant une instruction pour changer les données correspondant au premier abonnement dans le module d'identité d'abonné [SIM] est envoyé au premier abonnement ; et
le message [SMS] est en outre envoyé au module d'identité d'abonné [SIM] dans lequel, basées sur l'instruction, les données correspondant au premier abonnement enregistré dans le module d'identité d'abonné sont changées en données correspondant au deuxième abonnement.

2. Procédé tel que défini dans la revendication 1, **caractérisé en ce qu'**un accusé de réception du message [SMS] et du changement réussi est envoyé à partir du module d'identité d'abonné [SIM] et, basé sur l'accusé, le premier abonnement est retiré du système de communication de données.

3. Procédé tel que défini dans la revendication 1 ou 2, **caractérisé en ce que** le message [SMS] est envoyé au deuxième abonnement, un accusé de réception du message est envoyé à partir du deuxième abonnement et, basé sur l'accusé, le premier abonnement est retiré du système de communication de données.

4. Procédé tel que défini dans l'une quelconque des revendications précédentes 1 à 3, **caractérisé en ce que** le système attend un accusé de réception du message pour une période de temps prédéterminée et, si aucun accusé de réception n'est reçu au cours de cette période, le message est à nouveau envoyé au deuxième abonnement.

5. Procédé tel que défini dans l'une quelconque des revendications précédentes 1 à 4, **caractérisé en ce que** le premier abonnement est retiré lorsque la connexion du deuxième abonnement au système de communication de données est détectée dans le système.

6. Procédé tel que défini dans l'une quelconque des revendications précédentes 1 à 5, **caractérisé en ce qu'**un code d'identité d'abonné temporaire correspondant [TMSI] enregistré dans un module d'identité d'abonné est retiré.

7. Procédé tel que défini dans l'une quelconque des revendications précédentes 1 à 6, **caractérisé en ce que** le système de communication de données est un système de communication mobile GSM.

8. Système de communication de données destiné à contrôler un module d'identité d'abonné [SIM] contenant un code d'identité d'abonné [IMSI1] et une clé [K₁], ledit système de communication de données comprenant au moins deux registres d'abonné [HLR1, HLR2] pour la maintenance du registre du module d'identité d'abonné, un système de transmission de messages [SMSC] pour transmettre un message dans le réseau de communication mobile, et une station mobile [MS] à laquelle le module d'identité d'abonné est connecté ; système de communication de données dans lequel un enregistrement est créé dans le premier registre d'abonné [HLR1] lorsqu'un premier abonnement est ouvert, ledit enregistrement comprenant un numéro d'appel spécifique d'abonnement [MSISDNx], un code de chiffrement [K₁] et un code d'identité d'abonné [ISMII] associés à l'abonnement,
**caractérisé en ce que** le système de communication de données comprend un dispositif de contrôle (1) comprenant :
des moyens (2) destinés à ouvrir un deuxième abonnement associé au module d'identité d'abonné [SIM] ;
des moyens (3) destinés à créer un enregistrement dans le deuxième registre d'abonné [HLR2], ledit enregistrement comprenant le numéro d'appel [MSISDN], le code d'identité d'abonné [IMSI2] et la clé [K₁] correspondant au deuxième abonnement ;
des moyens (4) destinés à générer un message [SMS] à envoyer au premier abonnement et en outre au module d'identité d'abonné [SIM], ledit message contenant une instruction pour changer les données correspondant au premier abonnement dans le module d'identité d'abonné ; et
des moyens (5) destinés à changer les données correspondant au premier abonnement enregistrées dans le module d'identité d'abonné en données correspondant au deuxième abonnement.

9. Système de communication de données tel que défini dans la revendication 8, **caractérisé en ce que** le dispositif de contrôle (1) est disposé conjointement avec un système de contrôle de facturation et du client dans le système de communication de données.

10. Système de communication de données tel que défini dans la revendication 8 ou 9, **caractérisé en ce que** le système de transmission de messages [SMSC] est un système de messages courts.
